# EUROPEAN PATENT APPLICATION

(11) **EP 4 035 765 A1**
(43) Date of publication of application: **03.08.2022**
(21) Application number: 20869566.8
(22) Date of filing: 24.09.2020
(51) Int. Cl.: B01F 3/04, B01F 5/06, C02F 3/20

(54) **AIR DIFFUSER**

(30) Priority: 25.09.2019 JP 2019174346
(71) Applicant: Sanki Engineering Co., Ltd, Tokyo 1048506 (JP); Aquaconsult Anlagenbau GmbH, 2514 Traiskirchen (AT)
(72) Inventor: YOKOYAMA, Shoji, Tokyo 104-8506 (JP); OSAWA, Noriaki, Tokyo 104-8506 (JP); TANAKA, Hideharu, Tokyo 104-8506 (JP); HARADA, Takahiro, 2514 Traiskirchen (AT)
(74) Representative: SONN Patentanwälte OG
(86) International application number: PCT/JP2020/036138
(87) International publication number: WO 2021/060417

(57) **Abstract**

An air diffuser 4 includes: a bottom panel 4b provided in a horizontal direction in a tank in which water is filled; an air diffusion body 4c installed to cover the bottom panel 4b from above; and air diffusion holes 4e arranged to penetrate through the air diffusion body 4c, gas A fed to a gap between the bottom panel 4b and the air diffusion body 4c is discharged into water through the air diffusion holes 4e, and an air diffusion region R of the air diffusion body 4c where the air diffusion holes 4e are arranged has a width D equal to or larger than 10 mm and smaller than 120 mm.

## Description

### Field

The present invention relates to an air diffuser configured to feed gas such as air into water.

### Background

In an aeration tank at a wastewater treatment facility or the like, water is cleaned by metabolic activity of aerobic microorganism. Oxygen is fed into the tank in which water to be treated is filled so that organic substance is degraded by the aerobic microorganism.

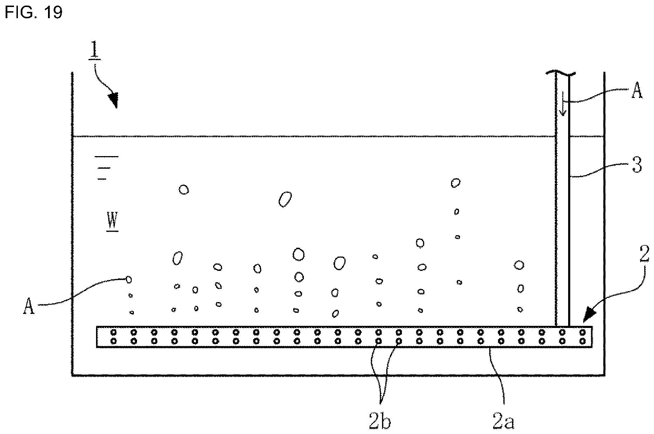

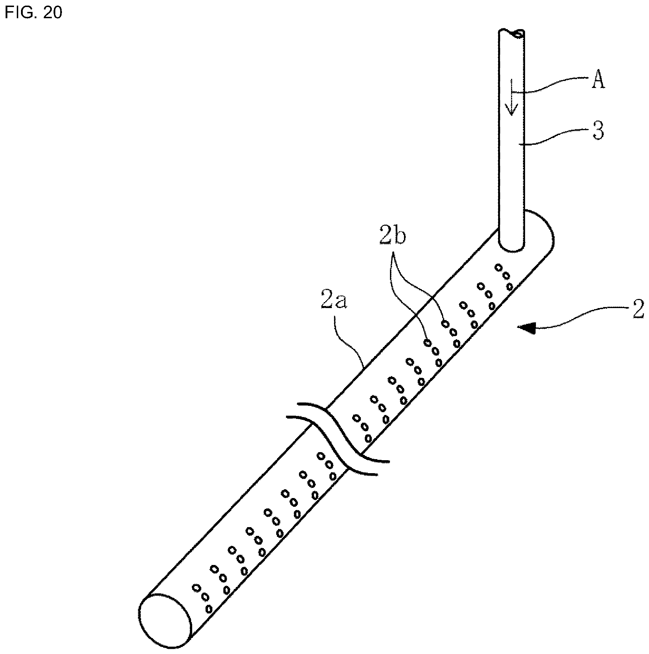

Fig. 19 illustrates an example of such an aeration tank. Water W to be treated is filled in a tank 1, and an air diffuser 2 is installed near a bottom part in the tank 1. The air diffuser 2 is a device having, for example, a form illustrated in Fig. 20, and gas (in this case, air) A is fed into a hollow main body 2a through an air guiding pipe 3 connected to one end of the main body 2a. The main body 2a is a pipe having an internal space and arranged with, on side surfaces, a large number of air diffusion holes 2b communicated to inside and outside. The air A fed into the main body 2a through the air guiding pipe 3 is discharged as air bubbles to the water W through the air diffusion holes 2b. The air A is made contact with the water W to dissolve oxygen into the water W, and the water W filled in the tank 1 is agitated by motion of the air bubbles so that the dissolved oxygen is globally supplied in the tank 1.

Examples of literatures disclosing technologies related to such an air diffuser include PTL 1 below.

### Citation List

### Patent Literature

[PTL 1] JP 2011-230068 A

### Summary

### Technical Problem

When the air diffuser 2 as described above is used to feed the air A to the water W in the tank 1, a non-illustrated blower needs to be actuated, but in this case, it is desirable to obtain a necessary amount of oxygen with small power as possible from a viewpoint of energy saving. Specifically, energy used for operation of the tank 1 can be saved by dissolving, into the water W, a large amount of oxygen as possible for the supply amount of the air A.

An air diffuser as described above is not limited to a wastewater treatment facility and the like but is generally used at a facility where an organism lives in water filled in a tank, and it is desirable to efficiently supply oxygen with less energy at such a facility as well. Moreover, a gas component other than oxygen, such as carbon dioxide, needs to be supplied to filled water in some cases, depending on usage of a tank and the like, and in such a case as well, it is preferable that the efficiency of gas supply (the ratio of the amount of a particular gas component supplied to water relative to the total amount of fed gas) is as high as possible.

The present invention is achieved in consideration of the above-described problem and intended to provide an air diffuser capable of efficiently supplying gas to water. Solution to Problem

The present invention relates to an air diffuser including: a bottom panel provided in a horizontal direction in a tank in which water is filled; an air diffusion body installed to cover the bottom panel from above; and air diffusion holes arranged to penetrate through the air diffusion body, gas fed to a gap between the bottom panel and the air diffusion body is discharged into water through the air diffusion holes, and an air diffusion region of the air diffusion body where the air diffusion holes are arranged has a width equal to or larger than 10 mm and smaller than 120 mm.

In the air diffuser of the present invention, the air diffusion holes may be arranged in an entire range of the air diffusion body in a width direction.

In the air diffuser of the present invention, the air diffusion holes may be arranged in a partial region of the air diffusion body in a width direction.

### Advantageous Effects of Invention

According to the air diffuser of the present invention, it is possible to achieve an excellent effect that gas can be efficiently supplied to water.

### Brief Description of Drawings

[Fig. 1]

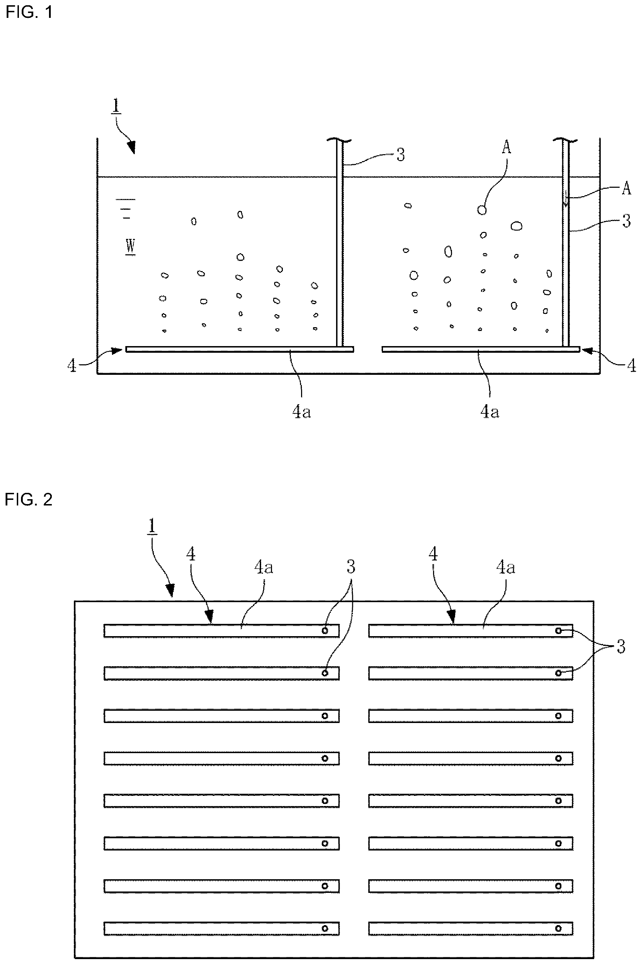

   Fig. 1 is a cross-sectional view schematically illustrating an installed state of an air diffuser according to a first example of the present invention.
[Fig. 2]
   Fig. 2 is a plan view schematically illustrating the installed state of the air diffuser according to the first example of the present invention.
[Fig. 3]

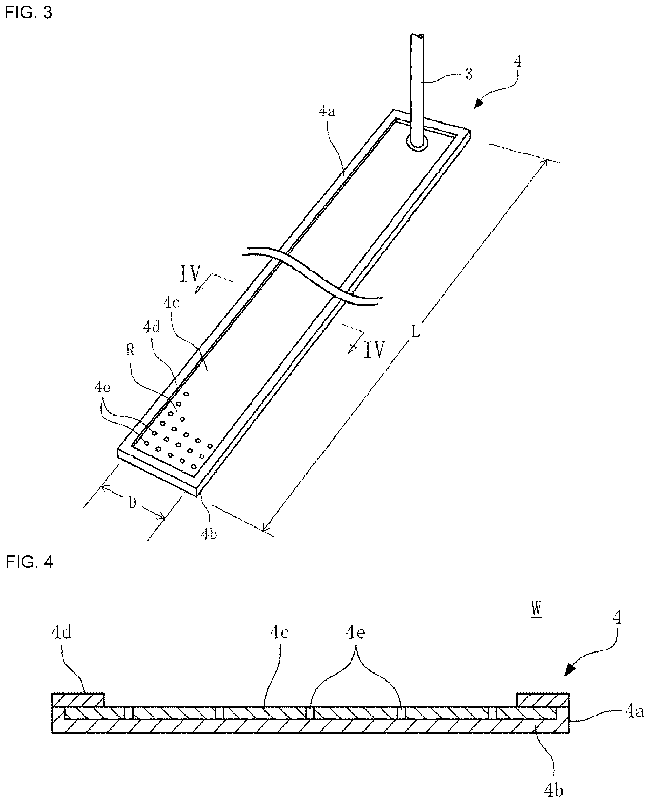

   Fig. 3 is a perspective view illustrating a form of the air diffuser according to the first example of the present invention.
[Fig. 4]
   Fig. 4 is a cross-sectional view illustrating the form of the air diffuser according to the first example of the present invention, the cross-sectional view being taken along line IV-IV in Fig. 3 and viewed in the direction of arrows.
[Fig. 5]

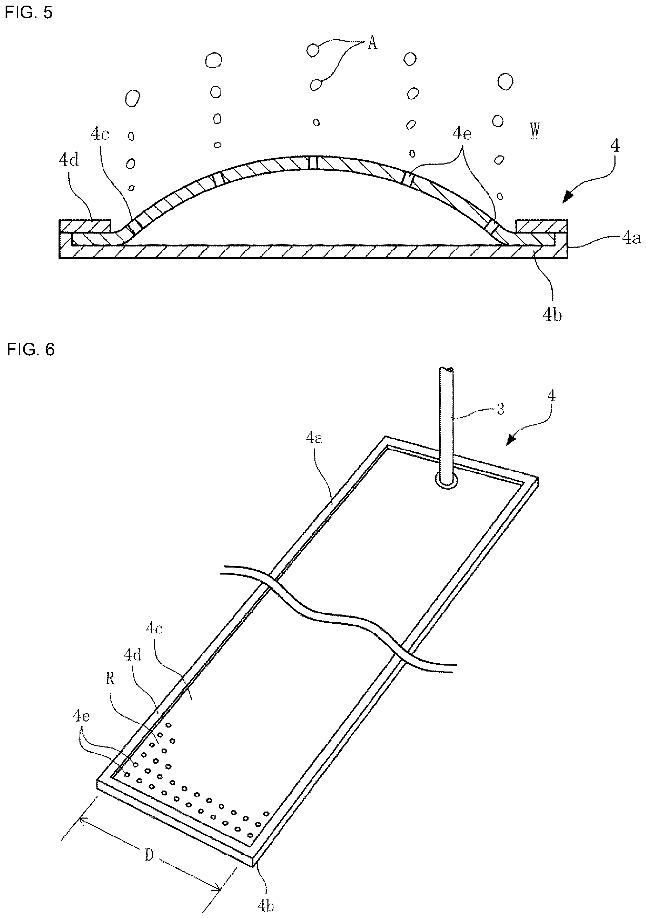

   Fig. 5 is a cross-sectional view illustrating an actuated state of the air diffuser according to the first example.
[Fig. 6]
   Fig. 6 is a perspective view illustrating a form of an air diffuser according to a reference example of the present invention.
[Fig. 7]

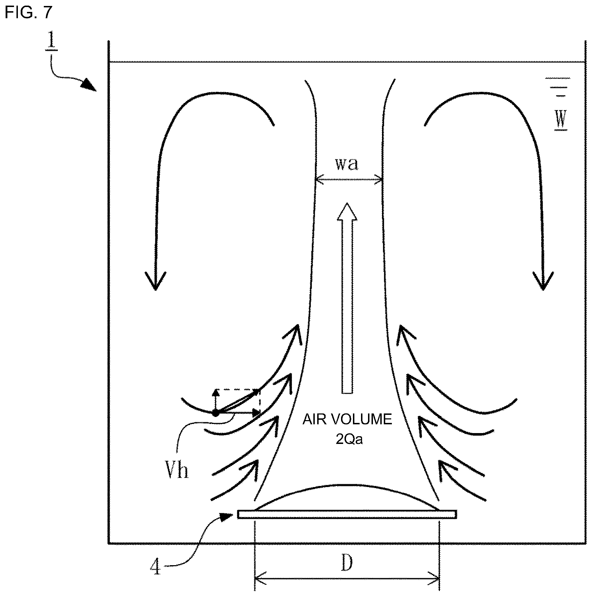

   Fig. 7 is a schematic diagram for description of motion of air and water when the air diffuser according to the reference example is actuated.
[Fig. 8]

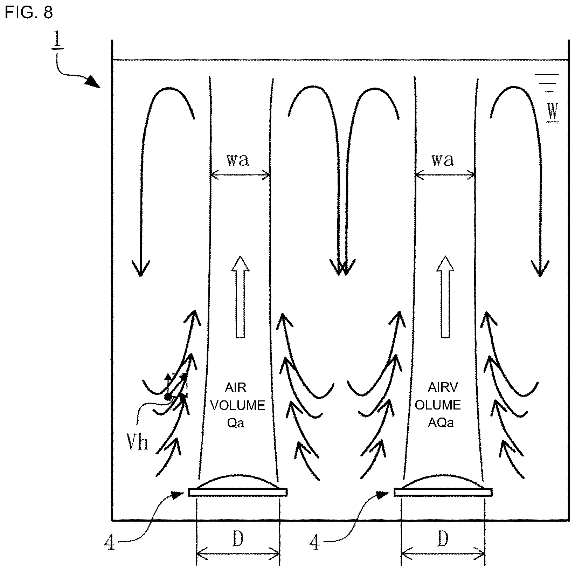

   Fig. 8 is a schematic diagram for description of motion of air and water when the air diffuser according to the first example is actuated.
[Fig. 9]

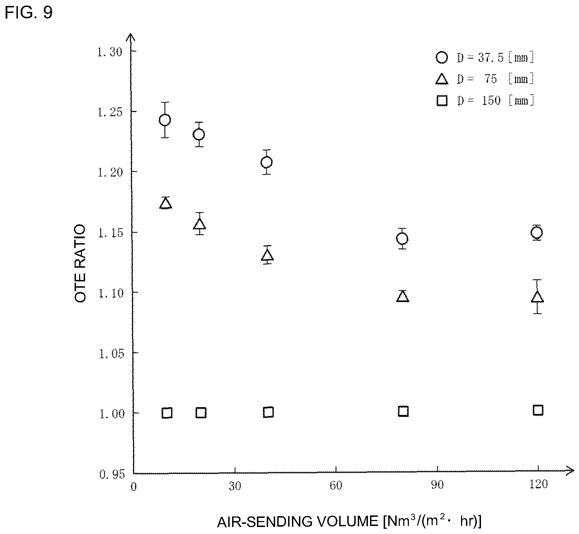

   Fig. 9 is a graph illustrating a result of an experiment that tests the relation between the width of an air diffusion region and the efficiency of oxygen solubility.
[Fig. 10]

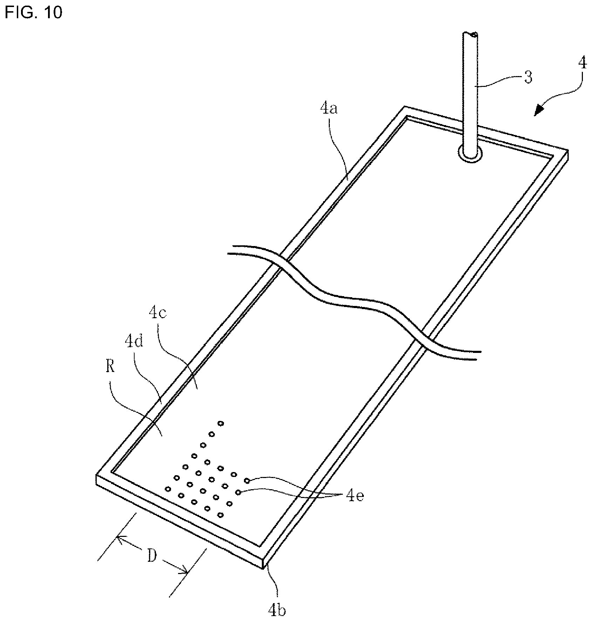

   Fig. 10 is a perspective view illustrating a form of an air diffuser according to a second example of the present invention.
[Fig. 11]

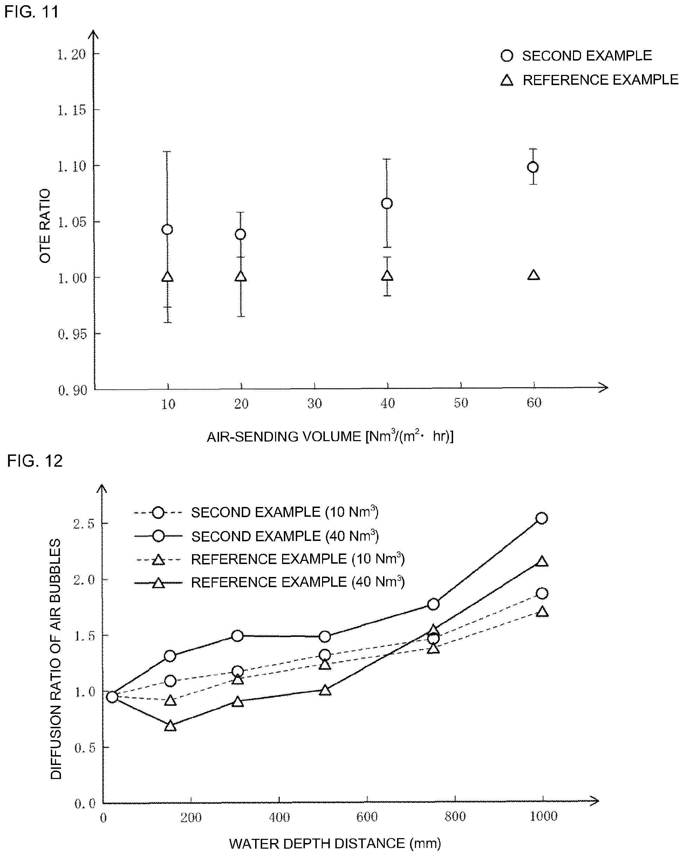

   Fig. 11 is a graph comparing the efficiency of oxygen solubility between the reference example and the second example.
[Fig. 12]
   Fig. 12 is a graph illustrating a result of an experiment that measures the width of a distribution range of air bubbles for each of the reference example and the second example of the present invention.
[Fig. 13]

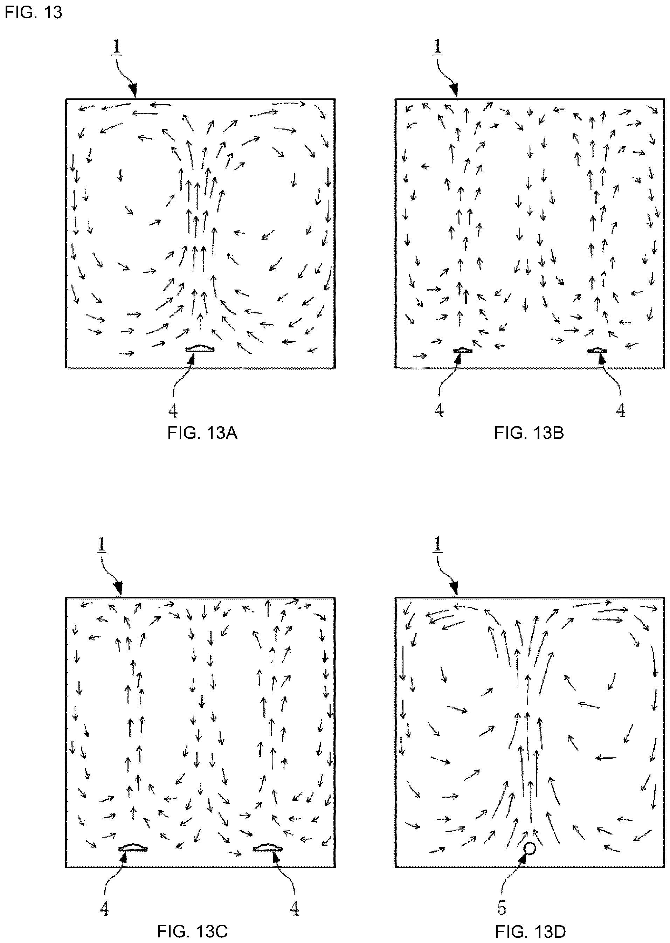

   Fig. 13 is a diagram illustrating simulation results of distribution of flow speed vectors of water in a tank in which air diffusers are installed: Fig. 13A corresponds to the reference example; Fig. 13B corresponds to the first example; Fig. 13C corresponds to the second example; and Fig. 13D corresponds to another reference example.
[Fig. 14]

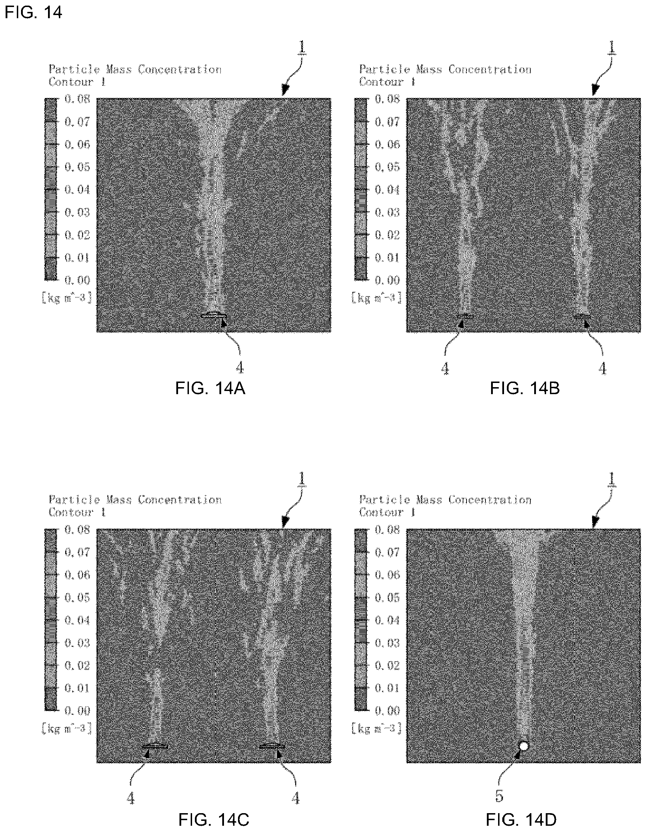

   Fig. 14 is a diagram illustrating simulation results of concentration distribution of air bubbles in a tank in which air diffusers are installed: Fig. 14A corresponds to the reference example; Fig. 14B corresponds to the first example; Fig. 14C corresponds to the second example; and Fig. 14D corresponds to the other reference example.
[Fig. 15]

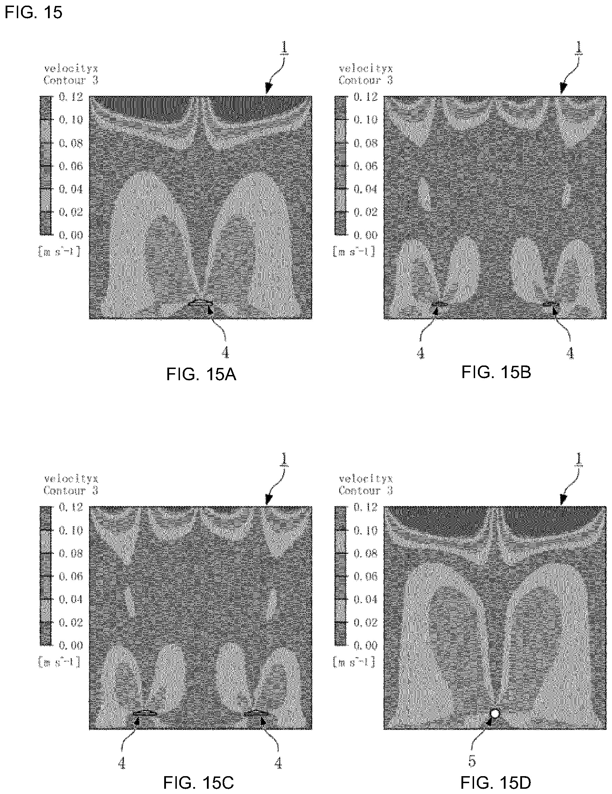

   Fig. 15 is a diagram illustrating a simulation result of distribution of the horizontal flow speed of water in a tank in which air diffusers are installed: Fig. 15A corresponds to the reference example; Fig. 15B corresponds to the first example; Fig. 15C corresponds to the second example; and Fig. 15D corresponds to the other reference example.
[Fig. 16]

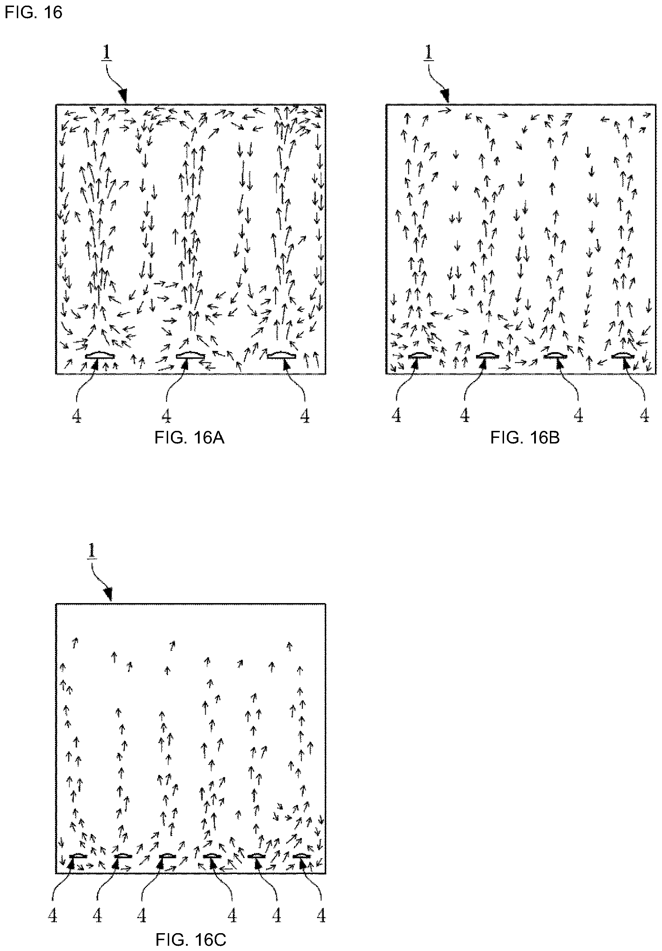

   Fig. 16 is a diagram illustrating a simulation result of distribution of flow speed vectors of water in a tank in which air diffusers are installed: Fig. 16A corresponds to a case in which the width of the air diffusion region is set to be 120 mm; Fig. 16B corresponds to a case in which the width of the air diffusion region is set to be 90 mm; and Fig. 16C corresponds to a case in which the width of the air diffusion region is set to be 60 mm.
[Fig. 17]

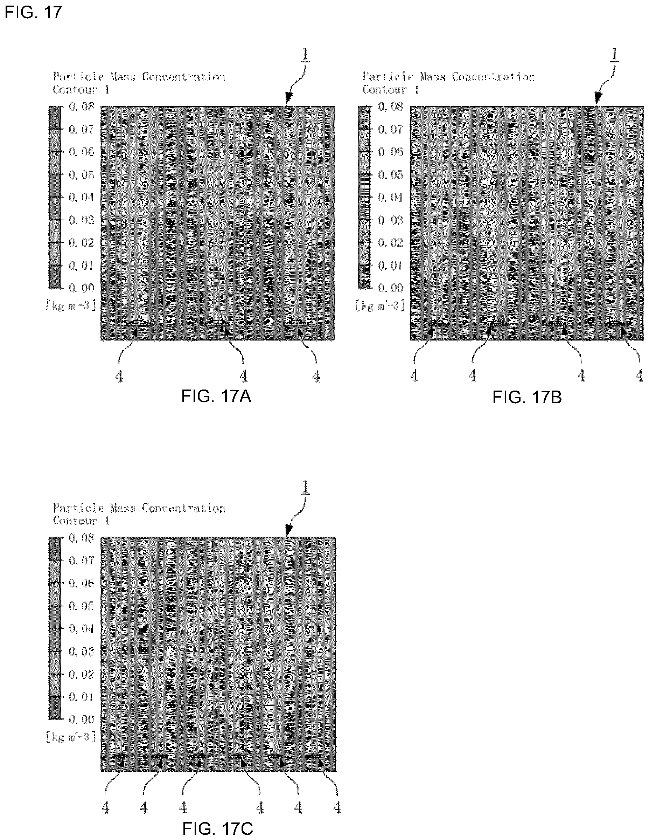

   Fig. 17 is a diagram illustrating a simulation result of concentration distribution of air bubbles in a tank in which air diffusers are installed: Fig. 17A corresponds to a case in which the width of the air diffusion region is set to be 120 mm; Fig. 17B corresponds to a case in which the width of the air diffusion region is set to be 90 mm; and Fig. 17C corresponds to a case in which the width of the air diffusion region is set to be 60 mm.
[Fig. 18]

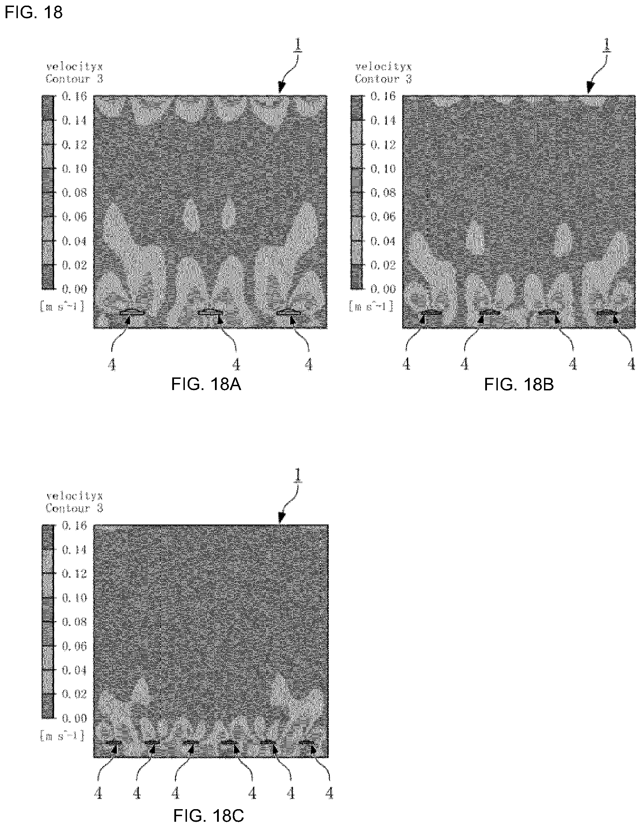

   Fig. 18 is a diagram illustrating a simulation result of distribution of the horizontal flow speed of water in a tank in which air diffusers are installed: Fig. 18A corresponds to a case in which the width of the air diffusion region is set to be 120 mm; Fig. 18B corresponds to a case in which the width of the air diffusion region is set to be 90 mm; and Fig. 18C corresponds to a case in which the width of the air diffusion region is set to be 60 mm.
[Fig. 19]
   Fig. 19 is a cross-sectional view illustrating a schematic configuration of a tank including an air diffuser.
[Fig. 20]
   Fig. 20 is a perspective view illustrating an exemplary form of an air diffuser. Description of Embodiments

An embodiment of the present invention will be described below with the accompanying drawings.

Figs. 1 to 4 illustrate an exemplary form of an air diffuser according to an embodiment of the present invention. Similarly to an air diffuser 2 according to a conventional example illustrated in Figs. 19 and 20, an air diffuser 4 according to the present first example is installed near a bottom part in a tank 1 and feeds air A supplied from an air guiding pipe 3 to water W filled in the tank 1.

The air diffuser 4 has a rectangular main body 4a. The main body 4a includes a bottom panel 4b provided in the horizontal direction in the tank 1 and serving as a bottom surface of the main body 4a, and an air diffusion body 4c installed to cover the bottom panel 4b from above. The bottom panel 4b is formed of a hard material such as stainless steel, and the air diffusion body 4c is formed as a soft film. A frame 4d is provided on the upper surfaces of four sides of the bottom panel 4b, and the air diffusion body 4c is held to the bottom panel 4b with the four sides sandwiched between the bottom panel 4b and the frame 4d.

The air diffusion body 4c in a film shape is arranged with a large number of air diffusion holes 4e penetrating through the air diffusion body 4c thereof in the entire range of the air diffusion body 4c in the width direction. The air guiding pipe 3 is connected to an end part of the air diffusion body 4c in the longitudinal direction so that the air A is fed from the air guiding pipe 3 to the gap between the air diffusion body 4c and the bottom panel 4b.

For sake of simplicity of illustration, Fig. 3 illustrates only some of the air diffusion holes 4e. The air diffusion holes 4e in Figs. 3 and 4 are schematically illustrated, and for example, the hole diameter and interval of actual air diffusion holes 4e as well as the thickness of the air diffusion body 4c may be changed as appropriate in accordance with various conditions when the invention is achieved (this is same for Figs. 5, 6, and 10).

As the air A is fed from the air guiding pipe 3 to the gap between the air diffusion body 4c and the bottom panel 4b, as illustrated in Fig. 5, the pressure of the air A deforms and inflates the air diffusion body 4c upward and the air A between the air diffusion body 4c and the bottom panel 4b is discharged through the air diffusion holes 4e. When supply of the air A from the air guiding pipe 3 is stopped, as illustrated in Fig. 4, the pressure of the water makes the air diffusion body 4c closely contact with the bottom panel 4b and the air diffusion holes 4e are closed. In this manner, in a case of use, the air A is discharged in the form of air bubbles into the water W through the air diffusion holes 4e, and in a case of non-use, the air diffusion holes 4e are closed to prevent the water W from entering inside, thereby preventing clogging by solid matters inside the main body 4a. When clogging has occurred to the air diffusion holes 4e in a case of non-use, the clogging can be removed by repeating supply and stop of the air A so that any solid matter is pressed out of the air diffusion holes 4e by deformation of the air diffusion body 4c and the pressure of the air A.

The width of a range (hereinafter referred to as an air diffusion region R) of the air diffusion body 4c where the air diffusion holes 4e are arranged, in other words, the dimension (illustrated as a width D in Fig. 3; the value of the width D described below is a dimension in a state in which the air diffusion body 4c is in close contact with the bottom panel 4b) of the range in the transverse direction is preferably equal to or larger than 10 mm and smaller than 120 mm as described later, but is 60 mm in the present first example. The length of the main body 4a, in other words, the dimension (illustrated as a length L in Fig. 3) of the main body 4a in the longitudinal direction may be changed as appropriate in accordance with a condition such as the size of an installation place and is, for example, 0.5 m to 4 m approximately.

Such setting of the width D of the air diffusion region R is preferable for supply of oxygen to the water W as described below. Fig. 6 illustrates, as a reference example of the present invention, the air diffuser 4 in which the width D of the air diffusion region R is set to be 120 mm, and Figs. 7 and 8 correspond to the air diffuser 4 according to the reference example illustrated in Fig. 6 and the air diffuser 4 according to the first example illustrated in Figs. 2 to 5, respectively, and schematically illustrate motion of the air A and the water W in operation.

With the tank 1 of the same width, the area of the air diffusion region R is same between the reference example (refer to Fig. 7) including only one air diffuser 4 in which the width D of the air diffusion region R (refer to Figs. 3 and 6) is 120 mm and the first example (refer to Fig. 8) including two air diffusers 4 in which the width D is 60 mm (the above-described numbers of air diffusers 4 per tank 1 are set for convenience of description, but in the actual tank 1, as illustrated in, for example, Fig. 2, the number of air diffusers 4 installed per tank 1 is typically larger than the numbers illustrated in Figs. 7 and 8). However, when the same total amount of the air A is fed into the air diffusers 4 according to the reference example and the first example, a larger amount of oxygen can be dissolved into the water W in the first example than in the reference example.

An experiment was performed to test the relation between the width D of the air diffusion region R and the efficiency of oxygen solubility in the water W (refer to Fig. 9). In this experiment, air diffusers 4 in which the width D was set to be 37.5 mm, 75 mm, and 150 mm, respectively, were used, the same amount of the air A per unit projection area was fed to the air diffusers 4, and the amount of oxygen dissolved in the water W was measured.

The tank 1 used in the experiment had a cylindrical shape having an inner diameter of 774 mm and was filled with the water W to the depth of 5.1 m, and a plurality of air diffusers 4 were installed near a bottom surface of the tank 1 (at the water depth of 5.0 m). A full floor coverage arrangement was employed in which the air diffusers 4 were equally disposed on the bottom surface of the tank 1 as illustrated in Fig. 2, and the air A was supplied to each air diffuser 4. Among dimensions of each air diffuser 4, the length L (refer to Fig. 3) was set to be 600 mm, and the length (dimension in a direction orthogonal to the width D) of the air diffusion region R was set to be 400 mm.

The width D of each air diffusion region R differs depending on a condition, and thus the number of installed air diffusers was adjusted to equalize the total area of air diffusion regions R occupying the tank 1 even when the width D of the air diffusion region R in each air diffuser 4 is different. The ratio of the total area of air diffusion regions R relative to the bottom area of the tank 1 was set to be 12.8%.

In Fig. 9, the horizontal axis represents an air-sending volume (total air flow rate [Nm3/(m2·hr)] to each air diffuser 4 per unit time and per unit projection area in the air diffusion body 4c, and the vertical axis represents a relative value (relative value when the efficiency of oxygen solubility for the width D of 150 mm is taken as one) of the efficiency of oxygen solubility for each condition. Under three conditions in which the width D was set to be (37.5 mm, 50 mm, and 75 mm) smaller than 120 mm, the efficiency of oxygen solubility significantly improved (about 1.1 to 1.25 times higher) as compared to a case of the width D of 150 mm, which exceeds 120 mm, and the efficiency of oxygen solubility was higher as the width D was smaller.

Fig. 10 illustrates an air diffuser 4 according to a second example of the present invention. In the air diffuser 4 according to the second example, the dimensions of the bottom panel 4b, the frame 4d, and the entire air diffusion body 4c are same as those in the reference example illustrated in Fig. 6, but the air diffusion holes 4e are arranged only in a central region of the air diffusion body 4c in the width direction. Specifically, the overall dimensions are same as those in the reference example, but the width D of the air diffusion region R is 60 mm, which is same as in the first example. With this configuration, components same as those in the reference example are used for the bottom panel 4b and the frame 4d, and the air diffusion body 4c at which disposition of the air diffusion holes 4e is changed is used, thereby achieving effects same as those of the first example as described above. Although, in this example, the air diffusion holes 4e are arranged at the center of the air diffusion body 4c in the width direction, positions at which the air diffusion holes 4e are arranged are not limited to the center, and the air diffusion holes 4e may be arranged in a partial region in the width direction. For example, the positions may be at both end parts in the width direction or near one edge.

Fig. 11 illustrates a result of an experiment performed to test the efficiency of oxygen solubility in the water W for each of the air diffusers 4 according to the reference example (refer to Fig. 7) and the second example (refer to Fig. 10). In the present experiment, air diffusers 4 in which the width D was set to be 60 mm and 120 mm, respectively, were used, the same amount of the air A per unit projection area was fed to the air diffusers 4, and the amount of oxygen dissolved in the water W was measured.

The tank 1 used in the experiment had a bottom surface having an internal dimension of 5 m × 5 m and was filled with the water W at the depth of 5.1 m, and a plurality of air diffusers 4 were installed near (at the water depth of 5.0 m) the bottom surface. The air A was supplied to the air diffusers 4 by the full floor coverage arrangement in which the air diffusers 4 were equally disposed on the bottom surface of the tank 1. The length of the air diffusion region R in each air diffuser 4 was set to be 2 m. The number of installed air diffusers was adjusted to equalize the total area of air diffusion regions R occupying the tank 1 even when the width D of the air diffusion region R in each air diffuser 4 is different. The ratio of the total area of air diffusion regions R relative to the bottom area of the tank 1 was set to be 11.5%.

In Fig. 11, the horizontal axis represents the total air flow rate [Nm3/(m2·hr)] to each air diffuser 4 per unit time and per unit projection area in the air diffusion body 4c, the vertical axis represents a relative value (relative value when the efficiency of oxygen solubility in the reference example for the same air-sending volume is taken as one) of the efficiency of oxygen solubility, each triangular symbol represents the reference example, and each circular symbol represents the second example. The efficiency of oxygen solubility in the second example is about 1.04 to 1.1 times higher than that in the reference example for each condition.

This is first thought to be due to decrease of the air bubble diameter. As the air bubble diameter is smaller, the ratio of the surface area of the air A relative to the volume thereof is higher, and accordingly, oxygen is more likely to be dissolved in the water W. Moreover, the ascending speed of an air bubble is slow, and thus the air bubble stays in the water W for a longer time during which oxygen is dissolved in the water W.

It is thought that the air bubble diameter decreases because air bubbles are less likely to coalesce. In the second example (Fig. 10), the supply amount of the air A per air diffuser 4 is smaller than in the reference example (Fig. 7) (when the total supply amount is 2Qa, the supply amount per air diffuser 4 is 2Qa in the reference example and Qa in the second example), and accordingly, buoyant force applied to an air bubble is small and the ascending speed of the air bubble is slow.

The water W circulates as illustrated with black arrows in Figs. 7 and 8 along with ascending of air bubbles. Specifically, the water W ascends along with ascending of air bubbles (illustrated with a white arrow) above each air diffuser 4, reverses near the water surface, descends at a position separated from the air diffuser 4 in the width direction, reverses again when having approached the air diffuser 4, and ascends together with air bubbles. When the ascending speed of air bubbles near the air diffuser 4 is slow, motion of the water W in this region is slow, and in particular, a speed component (illustrated as Vh in Figs. 7 and 8) in the horizontal direction toward the air diffuser 4 decreases. Motion of the water W toward the air diffuser 4 acts to move closer air bubbles discharged from the air diffuser 4, and thus when the speed of the water W is slow, air bubbles are less likely to coalesce and become integrated and larger, and accordingly, the air bubble diameter decreases. When the air bubble diameter is small, the ascending speed is slow as described above, and thus the speed of the water W further decreases. Consequently, it is presumed that a positive feedback relation exits between decrease of the ascending speed of air bubbles and reduction of the size of air bubbles.

It is thought that the efficiency of oxygen solubility is high when air bubbles discharged from the air diffuser 4 are distributed as much as possible in a wide range without concentrating in a narrow region in the tank 1. In circulation of the water W as described above, motion of the water W approaching the air diffuser 4 acts to gather air bubbles discharged from the air diffuser 4. Accordingly, the distribution range of air bubbles in the tank 1 increases as the speed component Vh in the horizontal direction decreases. Thus, the ratio (wa/D; hereinafter referred to as diffusion ratio of air bubbles) of the width (illustrated as wa in Figs. 7 and 8) of the distribution range of air bubbles at a height above the air diffuser 4 relative to the width D of the air diffusion region R is higher in the second example than in the reference example.

Fig. 12 illustrates a result of an experiment performed to test the width of the distribution range of air bubbles. The air A in the total amount of 10 N/m³ or 40 N/m³ per projection area 1 m² in the air diffusion body 4c was supplied to each of the air diffuser 4 according to the reference example illustrated in Fig. 7 and the air diffuser 4 according to the second example illustrated in Fig. 10, and the diffusion ratio wa/D of air bubbles at the distance (water depth distance) from each air diffuser 4 in the height direction was measured.

The diffusion ratio of air bubbles was higher in the second example than in the reference example for each condition. In particular, the diffusion ratio of air bubbles was lower than 1.0 in the reference example at a height within 200 to 400 mm from the air diffuser 4 (specifically, air bubbles discharged from the air diffuser 4 were gathered to a region narrower than the width D of the air diffusion region R by motion of the water W), but in the second example, such a phenomenon was not observed and the width wa of the distribution range of air bubbles was larger than the width D of the air diffusion region at any height for which measurement was performed.

Figs. 13 to 15 illustrate simulation results of distribution of flow speed vectors of the water W in the tank 1, concentration distribution of air bubbles, and horizontal flow speed of the water W for the reference example and the examples of the present invention. In simulation illustrated in Figs. 13 to 15, a test was performed for the air diffuser 4 (refer to Fig. 10) according to the second example of the present invention in addition to the air diffuser 4 according to the reference example (refer to Fig. 6) and the air diffuser 4 according to the first example (refer to Fig. 3).

In the simulation below, another test was performed for an air diffuser 5 having a shape similar to that of the air diffuser 2 according to the conventional example illustrated in Fig. 20 and was compared with that of each example. This air diffuser 5 according to another reference example includes a central body having a cylindrical shape and extending in the horizontal direction, and an air diffusion body having a film shape and provided to cover the circumferential surface of the central body, and air diffusion holes are arranged to both side surfaces of the air diffusion body. Air is fed to the gap between the central body and the air diffusion body and discharged to the outside through the air diffusion holes of both side surfaces. The air diffuser 5 having a cylindrical shape and including the air diffusion body and the central body has a diameter of 66 mm in a state in which air sending is stopped, and an air diffusion region arranged at each side surface along the cylindrical surface of the central body has a width (dimension in the circumferential direction) of 60 mm (120 mm in total).

Conditions of the simulation were set as follows. The inner wall of the tank 1 had a width of 1.4 m and a depth of 1.4 m, and the water depth was 1.4 m as well. Each air diffuser in the longitudinal direction had a dimension (corresponding to the length L in Fig. 3) of 1.2 m and was disposed at the height of 0.1 m from the bottom surface of the tank 1 with its longitudinal direction aligned with the depth direction. The number of installed air diffusers was one in the reference example and the other reference example and two in the first and second examples. In other words, the total area of air diffusion regions per bottom area of the tank 1 was set to be same in each reference example and each example. The air-sending volume was 40 Nm³/(m²·hr).

Fig. 13 is a diagram illustrating, in a simplified manner, the simulation result of distribution of flow speed vectors of the water W in the tank 1 in which the air diffusers 4 according to the reference example and the examples are installed. The ascending speed of the water W above each air diffuser 4 is slower in the examples illustrated in Fig. 13B and Fig. 13C than in the reference example illustrated in Fig. 13A. It is thought that this reflects the magnitude of the ascending speed of air bubbles as described above.

In addition, Fig. 13D illustrates flow speed vectors of the water W when the air diffuser 5 according to the other reference example is actuated. In a case of the air diffuser 5, the width (dimension in the circumferential direction) of each region (corresponding to the air diffusion region R in the examples and the reference example) disposed on both side surfaces and including air diffusion holes is equal to that of the air diffusers 4 according to the first and second examples described above and smaller than that of the reference example, but the flow speed vectors of the water W upward from the air diffuser 5 are extremely large and are much larger than in a case of the reference example illustrated in Fig. 13A. This is thought to be because air bubbles discharged through respective air diffusion holes arranged at each side surface of the main body coalesce while ascending along the side surface, and accordingly, buoyant force increases. Thus, in a case of the air diffuser 2 according to the other reference example, air bubbles discharged in the water W are larger than those from the above-described air diffusers 4 according to the first and second examples as well as the air diffuser 4 according to the reference example. As a result, the efficiency of oxygen solubility is thought to be largely lower than that in the reference example and the examples.

Fig. 14 illustrates the concentration distribution of air bubbles in the tank 1. In the reference example illustrated in Fig. 14A, the concentration of air bubbles immediately near the air diffuser 4 is extremely high, and a region in which the concentration of air bubbles is relatively high is widely distributed up to near the water surface. Thus, it is thought that air bubbles are likely to coalesce in a region in which the concentration of air bubbles is high, but in the examples illustrated in Fig. 14B and Fig. 14C, distribution of the region in which the concentration of air bubbles is high is narrower than that in the reference example illustrated in Fig. 14A. In a case of the other reference example illustrated in Fig. 14D, the region in which the concentration of air bubbles is high extends long upward from the right and left side surfaces of the main body, and it is thought that air bubbles are likely to coalesce in the region.

Fig. 15 illustrates distribution of the flow speed of the water W in the horizontal direction in the tank 1. In the reference example illustrated in Fig. 15A, a region in which the flow speed in the horizontal direction is fast spreads about a position immediately near the air diffuser 4, which is thought to cause narrowing of the width of the distribution range of air bubbles as illustrated in Fig. 12 or Fig. 14A, and in the examples illustrated in Fig. 15B and Fig. 15C, the region in which the flow speed in the horizontal direction is fast is narrower than in the reference example illustrated in Fig. 15A. In the other reference example illustrated in Fig. 15D, the region in which the flow speed in the horizontal direction is fast is larger than in the reference example illustrated in Fig. 15A.

As described above, it was checked that, in the examples including the air diffusion region R expanding along a horizontal plane and having the reduced width D of the air diffusion region R as illustrated in Figs. 3 and 10, the ascending speed of air bubbles and the flow speed of the water W in the tank 1 is globally lower, the region in which the concentration of air bubbles is high is narrower, and the distribution range of air bubbles is larger than in the reference example illustrated in Fig. 6 and the other reference example. It is thought that the difference in the efficiency of oxygen solubility as illustrated in Fig. 11 is attribute to decrease of the air bubble diameter as a result of such effects.

To obtain higher efficiency of oxygen solubility by the effects as described above, the width D of the air diffusion region R in each air diffuser 4 is preferably set to be equal to or larger than 10 mm and smaller than 120 mm, more preferably set to be equal to or larger than 30 mm and equal to or smaller than 90 mm. It is thought that the above-described effects are basically more effective as the width D is narrower, but the frame 4d holding the air diffusion body 4c needs to have a certain width for structural reasons. Thus, when the width D of the air diffusion region R in each air diffuser 4 is excessively narrow to have the area of the air diffusion region R necessary as the entire tank 1, the area of the frame 4d is larger than the air diffusion region R, and as a result, the bottom part of the tank 1 is mostly covered by the air diffuser 4 when the area of the air diffusion region R is globally ensured. Increase of the area of each air diffuser 4 causes increase of manufacturing cost, and furthermore, when the ratio of the installation area of the air diffuser 4 relative to the bottom area of the tank 1 is too high, motion of the water W in the tank 1 is encumbered, and such a failure that a necessary material such as oxygen does not reach the bottom part potentially occurs. This does not apply to a case in which a part corresponding to the air diffusion body 4c is disposed to pave the bottom of the tank 1, and it is thought that the efficiency of oxygen solubility improves because water in the tank 1 is agitated from the bottom by air bubbles, but even in this case, cost increase due to increase of area is not preferable. Thus, it is preferable that the width D of the air diffusion region R in each air diffuser 4 is equal to or larger than 10 mm or 30 mm as described above.

Figs. 16 to 18 each illustrate a simulation result of the relation between the width D of the air diffusion region R and the corresponding one of the distribution of flow speed vectors of the water W in the tank 1, the concentration distribution of air bubbles, and the horizontal flow speed of the water W, the simulation result being obtained by additionally changing the width of the air diffusion region and the number of disposed air diffusers. In each drawing, Figs. A illustrates a case (corresponding to the above-described reference example) in which air diffusers 4 with the width D of the air diffusion region R set to be 120 mm are installed, Figs. B illustrates a case in which air diffusers 4 with the width D set to be 90 mm are installed, and Figs. C illustrates a case (corresponding to the above-described first example) in which air diffusers 4 with the width D is set to be 60 mm are installed. In each drawing, the number of air diffusers 4 installed in the tank 1 is three in Figs. A, four in Figs. B, and six in Figs. C to set the equal total area of air diffusion regions per bottom area of the tank 1.

Fig. 16 illustrates the distribution of flow speed vectors of the water W in the tank 1, and the ascending speed of the water W above each air diffuser 4 is slower in the cases illustrated in Fig. 16B and Fig. 16C (the width D = 90 mm and 60 mm) than in the case illustrated in Fig. 16A (the width D = 120 mm). Fig. 17 illustrates the concentration distribution of air bubbles in the tank 1: the concentration of air bubbles immediately near each air diffuser 4 is extremely high in Fig. 17A; and distribution of the region in which the concentration of air bubbles is high is narrower in Fig. 17B and Fig. 17C than in the reference example illustrated in Fig. 17A. Fig. 18 illustrates distribution of the flow speed of the water W in the horizontal direction in the tank 1: the region in which the flow speed in the horizontal direction is fast largely spreads about each air diffuser 4 in Fig. 18A but is narrow in Fig. 18B and Fig. 18C. In this manner, when the width D of the air diffusion region R is set to be smaller than 120 mm, it is possible to decrease the ascending speed of air bubbles and the flow speed of the water W in the tank 1, narrow the region in which the concentration of air bubbles is high, and increase the distribution range of air bubbles, thereby reducing the air bubble diameter and improving the efficiency of oxygen solubility.

As described above, the air diffuser 4 according to each of the above-described examples includes: the bottom panel 4b provided in the horizontal direction in the tank 1 in which the water W is filled; the air diffusion body 4c installed to cover the bottom panel 4b from above; and the air diffusion holes 4e arranged to penetrate through the air diffusion body 4c, the gas (air) A fed to the gap between the bottom panel 4b and the air diffusion body 4c is discharged into the water W through the air diffusion holes 4e, and the air diffusion region R where the air diffusion holes 4e are arranged in the air diffusion body 4c has a width D equal to or larger than 10 mm and smaller than 120 mm. With this configuration, it is possible to decrease the ascending speed of air bubbles and the flow speed of the water W in the tank 1, narrow the region in which the concentration of air bubbles is high, and increase the distribution range of air bubbles, thereby reducing the air bubble diameter and improving the efficiency of solubility of a specific component (oxygen) in the gas A into the water W.

In the air diffuser 4, the air diffusion holes 4e may be arranged in the entire range of the air diffusion body 4c in the width direction.

In the air diffuser 4, the air diffusion holes 4e may be arranged in a partial region of the air diffusion body 4c in the width direction.

Thus, according to the above-described present example, it is possible to efficiently supplying gas to water.

The air diffuser of the present invention is not limited to the above-described examples but may be modified in various manners without departing from the scope of the present invention.

### Reference Signs List

1 Tank
4 Air diffuser
4b Bottom panel
4c Air diffusion body
4e Air diffusion hole
A Gas (air)
D Width
R Air diffusion region
W Water

## Claims

1. An air diffuser comprising:
a bottom panel provided in a horizontal direction in a tank in which water is filled;
an air diffusion body installed to cover the bottom panel from above; and
air diffusion holes arranged to penetrate through the air diffusion body, wherein
gas fed to a gap between the bottom panel and the air diffusion body is discharged into water through the air diffusion holes, and
an air diffusion region of the air diffusion body where the air diffusion holes are arranged has a width equal to or larger than 10 mm and smaller than 120 mm.

2. The air diffuser according to claim 1, wherein the air diffusion holes are arranged in an entire range of the air diffusion body in a width direction.

3. The air diffuser according to claim 1, wherein the air diffusion holes are arranged in a partial region of the air diffusion body in a width direction.
